(19) Europäisches Patentamt / European Patent Office / Office européen des brevets

(11) **EP 4 538 647 B1**

(12) **EUROPEAN PATENT SPECIFICATION**

(45) Date of publication and mention
of the grant of the patent:
**27.08.2025 Bulletin 2025/35**

(21) Application number: **23203568.3**

(22) Date of filing: **13.10.2023**

(51) International Patent Classification (IPC):
**G01C 21/34** *(2006.01)* **G01C 21/36** *(2006.01)*
**G01C 21/00** *(2006.01)* **G08G 1/16** *(2006.01)*

(52) Cooperative Patent Classification (CPC):
**G01C 21/3815; G01C 21/3446; G01C 21/3658;
G08G 1/167**

(54) **CONTROLLED-ACCESS HIGHWAY EGRESS ROUTE DETERMINATION**

BESTIMMUNG DER AUSGANGSROUTE EINER AUTOBAHN MIT KONTROLLIERTEM ZUGANG

DÉTERMINATION D'ITINÉRAIRE DE SORTIE D'AUTOROUTE À ACCÈS CONTRÔLÉ

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(43) Date of publication of application:
**16.04.2025 Bulletin 2025/16**

(73) Proprietor: **Bayerische Motoren Werke
Aktiengesellschaft
80809 München (DE)**

(72) Inventors:
• **Meene, Benjamin
78573 Wurmlingen (DE)**
• **Fayad, Sami
81369 München (DE)**
• **Rieth, Dominik
80992 München (DE)**

(56) References cited:
**EP-A1- 3 900 997    US-A1- 2014 278 052
US-A1- 2020 249 048    US-A1- 2022 153 315**

**Description**

TECHNICAL FIELD

The invention generally relates to determining an egress route from an at least partially controlled-access highway for an at least partially autonomous vehicle, and more precisely to generating an egress route graph, which is then used to determine the egress route.

BACKGROUND

At least partially autonomous vehicles, i.e. vehicles capable of autonomous longitudinal and lateral control with the driver taking their hands off the steering wheel on certain types of roads, typically rely on map data to determine a path of the at least partially autonomous vehicle. On an at least partially-controlled access multilane highway, i.e. a road with multiple lanes per direction with each direction physically separated from the other and access and egress therefrom at least for some sections limited to on-ramps and off-ramps respectively, map data may include information regarding a number of lanes at any given point of an at least partially-controlled access multilane highway, as well as information on how lanes are connected to one another in case a lane ends or starts. However, such information may be incomplete or may be missing entirely for some sections of the at least partially controlled-access highway. Consequently, the at least partially autonomous vehicle may be unable to determine longitudinal and lateral control while driving on sections of the at least partially controlled-access highway with incomplete or missing map data. This may in particular be an issue if the at least partially autonomous vehicle is approaching a target off-ramp, i.e. when the vehicle is about leave the at least partially controlled-access multilane highway. The driver would thus be required to take over control of the at least partially autonomous vehicle in these situations.

Document US 2014/278052 A1 discloses a lane-level route optimizer, which may provide an optimal route on a highway towards an off ramp. A cost value is added for any lane changes, so that the optimal route minimises the number of lane changes.

It is an objective of the present disclosure to enable an at least partially autonomous vehicle to determine an egress route while driving on at least partially controlled-access multilane highway with sectionally incomplete map data.

SUMMARY OF **THE INVENTION**

To achieve this objective, the present disclosure provides a method for determining an egress route for a vehicle to a target off-ramp of an at least partially controlled-access multilane highway. The method comprises obtaining map data regarding the at least partially controlled-access multilane highway. The map data is arranged in a plurality of links. Each link defines for a corresponding section of the at least partially controlled-access multilane highway a geographic position. At least a subset of the plurality of links includes at least one of a lane number and lane relationship information. The method further comprises generating an egress route graph based on the map data and the target off-ramp. The egress route graph comprises a plurality of egress route nodes and a plurality of egress route edges. The plurality of egress route edges includes lane direction edges based on the lane numbers and the lane relationship information of the plurality of links and lane change edges corresponding to lane changes between lanes of the at least partially controlled-access multilane highway. Each egress route node of the plurality of egress route nodes defines a start and an end of the lane direction edges based on the geographic positions of the plurality of links. The method further comprises assigning to each egress route edge a confidence value indicative of an existence probability of each egress route edge and a cost value indicative of the cost of traversing each egress route edge. The method further comprises determining the egress route. The egress route corresponds to a path through the egress route graph to the target off-ramp, which has an optimized total confidence value and an optimized total cost value.

The present disclosure further provides an automotive control unit. The automotive control unit comprises at least one processing unit and a memory coupled to the at least one processing unit and configured to store machine-readable instructions. The machine-readable instructions cause the at least one processing unit to obtain map data regarding the at least partially controlled-access multilane highway. The map data is arranged in a plurality of links. Each link defines for a corresponding section of the at least partially controlled-access multilane highway a geographic position. At least a subset of the plurality of links includes at least one of a lane number and lane relationship information. The machine-readable instructions further cause the at least one processing unit to generate an egress route graph based on the map data and the target off-ramp. The egress route graph comprises a plurality of egress route nodes and a plurality of egress route edges. The plurality of egress route edges includes lane direction edges based on the lane numbers and the lane relationship information of the plurality of links and lane change edges corresponding to lane changes between lanes of the at least partially controlled-access multilane highway. Each egress route node of the plurality of egress route nodes defines a start and an end of the lane direction edges based on the geographic positions of the plurality of links. The machine-readable instructions further cause the at least one processing unit to assign to each egress route edge a confidence value indicative of an existence probability of each egress route edge and a cost value indicative of the cost of traversing each egress route edge. The machine-readable instructions further cause the at least one processing unit determine the egress route. The egress route corresponds to a path through the egress route graph to the target off-ramp, which has an optimized total confidence value and an optimized total cost value.

The present disclosure further provides a vehicle comprising the automotive control unit.

BRIEF DESCRIPTION OF THE DRAWINGS

Examples of the present disclosure will be described with reference to the following appended drawings, in which like reference signs refer to like elements.

FIG. 1A illustrates a vehicle on an at least partially controlled-access multilane highway according to examples of the present disclosure.

FIG. 1B illustrates map data corresponding to the at least partially controlled-access multilane highway of Fig. 1A according to examples of the present disclosure.

FIG. 1C illustrates an egress route graph corresponding to the at least partially controlled-access multilane highway of Fig. 1A and generated based on the map data of Fig. 1B according to examples of the present disclosure.

Fig. 2 illustrates the concept of generating an egress route graph based on partially incomplete map data according to examples of the present disclosure.

FIG. 3 shows a flowchart of a method for determining an egress route for a vehicle to a target off-ramp of an at least partially controlled-access multilane highway according to examples of the present disclosure.

FIG. 4 illustrates a vehicle according to examples of the present disclosure.

Fig. 5 illustrates an automotive control unit according to examples of the present disclosure.

It should be understood that the above-identified drawings are in no way meant to limit the present disclosure. Rather, these drawings are provided to assist in understanding the present disclosure. The person skilled in the art will readily understand that aspects of the present invention shown in one drawing may be combined with aspects in another drawing or may be omitted without departing from the scope of the present disclosure.

DETAILED DESCRIPTION

The present disclosure generally provides a method for determining an egress route for a vehicle to a target off-ramp of an at least partially controlled-access multilane highway as well as an automotive control unit configured to execute instructions implementing the method for determining the egress route and a vehicle including the automotive control unit.

The method generates an egress route graph based on map data. More precisely, the map data of the at least partially controlled-access multilane highway is arranged in links, which include lane information. The lane information may e.g. specify for at least for some sections of the at least partially controlled-access multilane highway a number of lanes as well as how lanes are connected if lanes start or end. The method takes the links and the included lane information and generates an egress route graph based on the links and the included lane information. If lane information for a section of the at least partially controlled-access multilane highway is incomplete or missing, the method estimates egress route nodes and egress route edges of the egress route graph corresponding to the section of the at least partially controlled-access multilane highway with incomplete lane information. To account for the estimation of egress route edges and egress route nodes of the egress route graph, the method assigns each egress route edge of the egress route graph a confidence value, which indicates the confidence the method has that a given egress route edge exists. The method further assigns each egress route edge a cost value, which indicates the cost of traversing the respective egress route edge with the vehicle performing the method. Based on the egress route graph and the assigned confidence value and the assigned cost value, the method determines an egress route toward the target off-ramp by determining a path through the egress route graph which minimizes the total cost and maximizes the total confidence associated with reaching the target off-ramp.

The method may further update the egress route graph based on sensor data of the vehicle as the vehicle travels along the egress route and may accordingly update the egress route in order to take into account surrounding traffic impacting cost values of the egress route edges as well as changing confidence values of the egress route edges, e.g. based on the surrounding traffic or environment features detected by the vehicle.

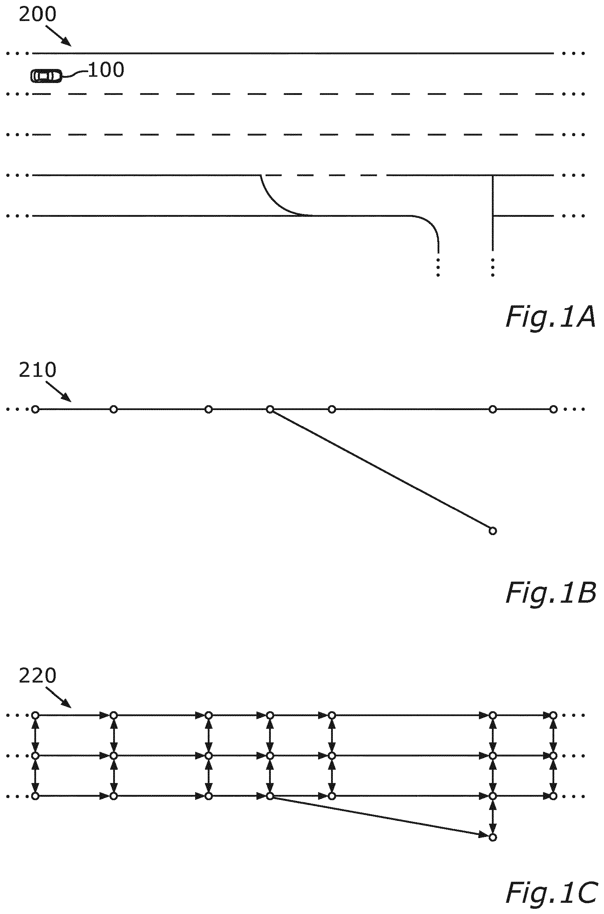

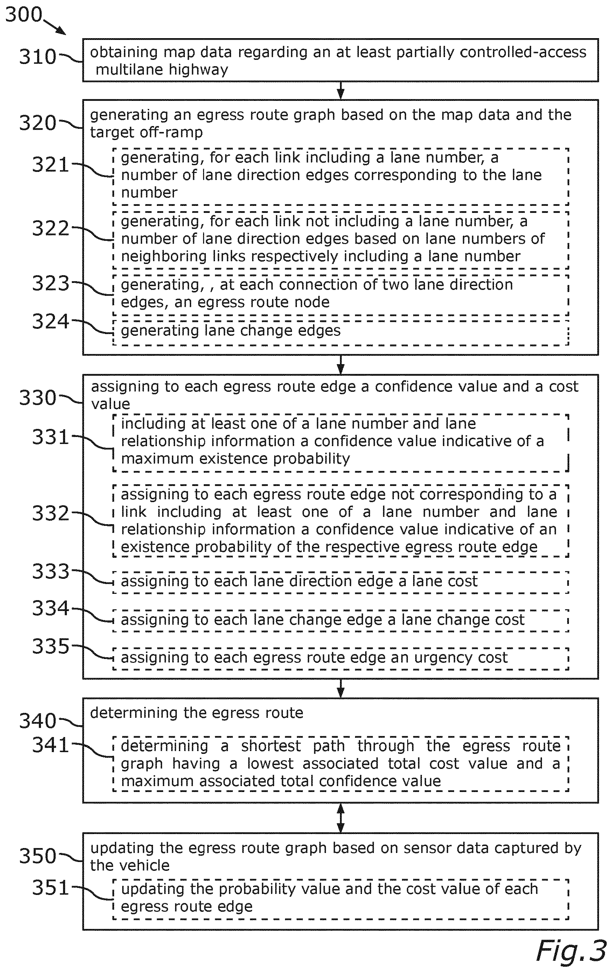

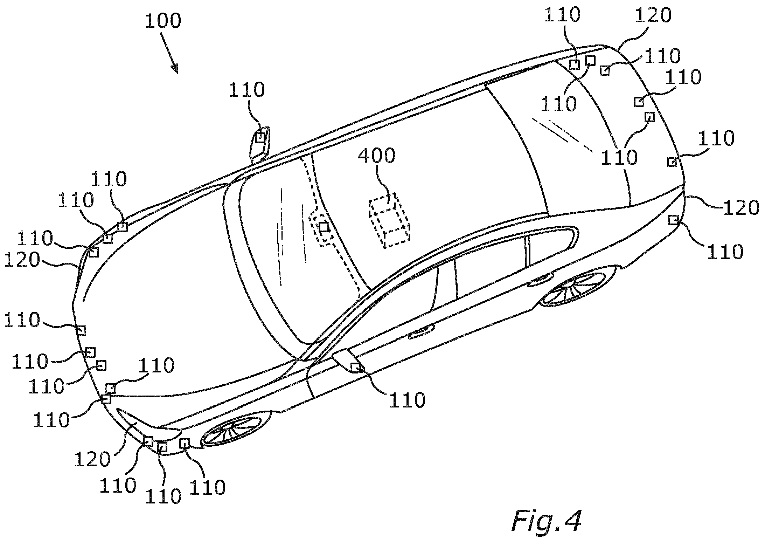

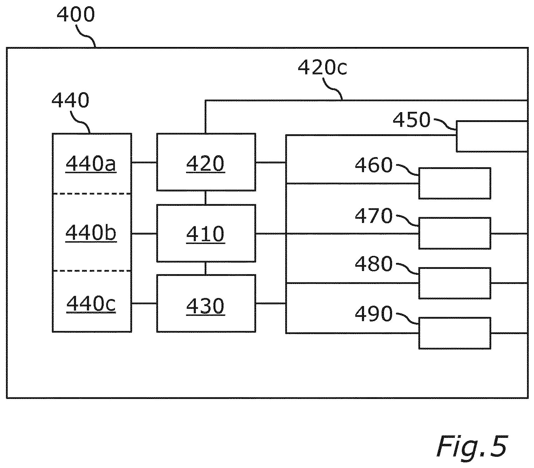

This general concept will be explained with reference to the appended drawings, with Fig. 3 providing a flowchart of a method 300 for determining an egress route for a vehicle to a target off-ramp of an at least partially controlled-access multilane highway, and Figs. 1A to 2 illustrating various aspects of method 300. In addition, Fig. 4 illustrates a vehicle according to the present disclosure and Fig. 5 illustrates an automotive controller configured to perform method 300.

It will be understood that dashed boxes in Fig. 3 illustrate optional steps of method 300.

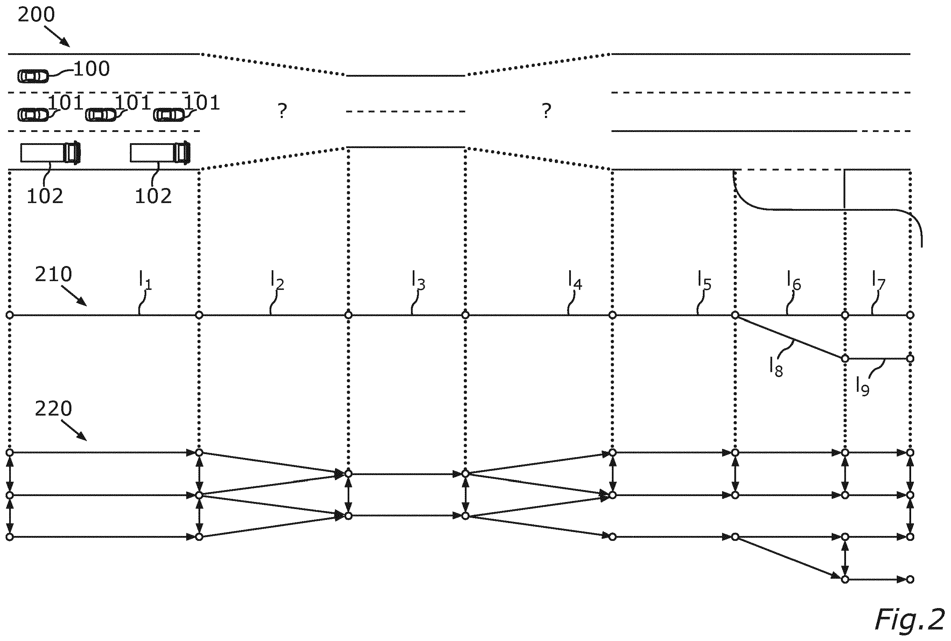

Method 300 is configured to determine an egress route for a vehicle, such as vehicle 100 of Fig. 4, to a target off-ramp of an at least partially controlled-access multilane highway, such as at least partially controlled-access multilane highway 200 of Fig. 1 or of Fig. 2.

Vehicle 100 in the context of the present disclosure refers to any kind of motor vehicle configured to transport people and/or cargo. The motor of vehicle 100 may be any kind of motor, such as an electric motor or an internal combustion engine. Vehicle 100 may e.g. be a passenger vehicle as shown in Fig. 4. It will however be understood that the vehicle 100 may also be a bus, a truck or any other kind of vehicle including one or more sensors 110 and an automotive control unit 400 enabling vehicle 100 to drive in a partially automated manner. In other words, automotive control unit 400 and one or more sensors 110 are configured to enable at least partial driving automation, i.e. level 2 as defined in standard J3016 of SAE International. Accordingly, method 300 provides the egress route to functions within automotive control unit 400 which control longitudinal and lateral movement to guide vehicle 100 to the target off-ramp under supervision of a driver of vehicle 100. It will be understood that automotive control unit 400 and one or more sensors 110 may enable higher levels of automation, i.e. the egress route may be used as input for lateral and longitudinal control of vehicle 100 with limited or without supervision by the driver, or even with no driver present.

The one or more sensors 110 may be configured to capture sensor data indicative of the environment of vehicle 100, which may provide the environmental awareness enabling at least partial driving automation. For example, the one or more sensors 110 may provide vehicle 100 with information on the position and size of other vehicles 101 and trucks 102 of Fig. 2. To this end, the one or more sensors 110 may be radar sensors, which may be configured to emit radio waves in order to determine a distance, an angle and a velocity of objects around the vehicle based on the reflected radio waves. The one or more sensors 110 may be light detection and ranging (LIDAR) sensors, which are configured to emit laser beams in order to determine a distance, an angle and a velocity of objects around vehicle 100 based on the reflected laser beams. The one or more sensors 110 may be cameras, which capture images of the environment of the vehicle. The one or more sensors 110 may be thermographic cameras, which capture images of the environment of vehicle 100 based on infrared radiation. It will be understood that LIDAR sensors, radar sensors or cameras are merely provided as examples of sensor types of the one or more sensors 110. For example, the one or more sensors 110 may also be ultrasonic sensors. More generally, the one or more sensors 110 may be any type of sensor capable of capturing sensor data indicative of the environment of vehicle 100. It will further be understood that the one or more sensors 110 may include multiple sensors of various types of sensors. Further, the one or more sensors 110 of the same type may exhibit different properties, e.g. by being configured to capture sensor data at different ranges, such as a close range, a middle range and a far range. For example, vehicle 100 may include three close range radar sensors each at a front and a back of vehicle 100, a middle range to far range radar sensor at the back of vehicle 100, a LIDAR sensor at the front of vehicle 100, a rear-facing camera at the back of vehicle 100, a front-facing camera at the front of the vehicle, a front-facing camera at the rear-view mirror and a rear-facing close range to middle range radar sensor in each door-mounted outer rear view mirror. It will be understood that vehicle 100 may include more or fewer automotive sensors than shown in Fig. 4 and discussed in the above example.

Automotive control unit 400 will be discussed in more detail below with regard to Fig. 5.

At least partially controlled-access multilane highway 200, hereinafter referred to as highway 200, may be any kind of road with multiple lanes per direction with the directions being separated from one another e.g. by a strip of land, a median barrier or a combination of both. Further, access onto and egress from highway 200 is at least partially controlled, i.e. access onto and egress from highway 200 is at least in some sections of highway 200 limited to on-ramps and off-ramps. For example, access onto and egress from highway 200 may be fully controlled, in which case highway 200 may be referred to as a controlled-access highway, such as a freeway, an interstate or a motorway. In a further example, some sections of highway 200 may include at-grade intersections, in which case highway 200 may also be referred to as a limited-access highway, a dual-carriageway or an expressway. Examples of one direction including an off-ramp of highway 200 are shown in Fig. 1A and Fig. 2.

In step 310, method 300 obtains map data, such as map data 210, regarding the at least partially controlled-access multilane highway 200.

Map data 210, as e.g. illustrated in Fig. 1B and Fig. 2, is configured to provide location information regarding highway 200. To this end, map data 210 is arranged in a plurality of links, such as links $l_1$ to $l_{10}$ of Fig. 2. Each link defines for a corresponding section of highway 200 a geographic position of the section, e.g.by defining a start and an end of the section in terms of the geographic coordinate system (GCS) as defined in the European Petroleum Survey Group (EPSG) Geodetic Parameter Dataset or any other representation of geographic positions. In both Fig. 1B and Fig. 2A, the starts and the ends of the sections and thus the starts and the ends of the links are illustrated as nodes with a node indicating a corresponding start location of a link and a corresponding end location of a link. Further, Fig. 2 illustrates, based on the vertical dotted lines, that the start locations of the links and the end locations of the links correspond to the start and the end, respectively, of sections of highway 200. It will accordingly be understood that a link in the context of the present disclosure refers to a representation of the geographic position and the length of a section of highway 200. The links may be of different lengths, as shown in Figs. 1B and 2, or may be of equal length. Further, the links may represent straight sections as well as curved sections of highway 200.

In addition to providing a representation of the geographic position of a section of highway 200, at least a subset of the plurality of links further respectively includes lane information, which comprises at least one of a lane number and lane relationship information. The lane number is a number indicating how many lanes a given section of highway 200 includes. The lane relationship information defines how the lanes of a given section connect to lanes of neighboring sections, i.e. the section preceding a given section and the section succeeding a given section.

While every link defines the geographic position of each section, not every link may respectively include lane information. Further, not every link may include both a lane number and lane relationship information. Accordingly, four types of link may exist: links only defining the geographic position of a given section, links defining a lane number of a given section in addition to the geographic position, links defining lane relationship information of a given section in addition to the geographic position, and links including both a lane number and lane relationship information in addition to defining the geographic position.

The fact that not all links may include lane information is illustrated by links $l_2$ and $l_4$ in Fig. 2, which do not include lane information, and their corresponding sections of highway 200, which are illustrated by pointed lines and a question mark. That is, map data 210 indicates the start and end of the sections of highway 200 corresponding to links $l_2$ and $l_4$ but does not indicate whether the lanes of the preceding sections continue through the sections corresponding to links $l_2$ and $l_4$ or end within these sections and how they connect to the next sections of highway 200 corresponding to links including lane numbers. In other words, the lane information of map data 210 may be partially incomplete. The incompleteness of the lane information may extend to on-ramps and off-ramps, i.e. map data 210 may indicate the presence of a ramps but not on which side of highway 200 the respective ramps are located.

The lane information included in each link of map data 210 may further include lane change information indicative of permissible changes between lanes. The lane change information may e.g. be based on road markings or traffic regulations. For example, map data 210 may indicate the presence of a shoulder, onto which a lane change may not be allowed unless in case of an emergency or a breakdown. Accordingly, the lane change information may not indicate lane changes onto the shoulder. However, in countries allowing use of the shoulder during peak traffic or similar conditions, the lane change information may indicate such temporarily permissible lane changes.

It will be understood that the plurality of links of map data 210 may include further information or may include additional data inconsistencies as discussed above. For conciseness, the above discussion of map data 210 focuses only on aspects of map data 210 relevant to the present disclosure.

In step 320, method 300 generates an egress route graph, such as egress route graph 220 of Fig. 1C, based on map data 210 and the target off-ramp. More precisely, based on map data 210 egress route graph 220 provides a representation of all conceivable paths between the location of vehicle 100 on highway 200 and the target off-ramp, i.e. the off-ramp of highway 200 at which vehicle 100 should exit highway 200, as e.g. determined by a navigation function of automotive controller 400. Since vehicle 100 is typically located on a link of map data 210 when egress route graph 220 is generated, egress route graph 220 may start at a location behind vehicle 100 in order to include the entirety of the link which vehicle 100 currently traverses.

Egress route graph 220 comprises a plurality of egress route nodes and a plurality of egress route edges. Accordingly, egress route graph 220 may be defined as shown in equation (1).

$$G_{220} = (V, E) \qquad\qquad (1)$$

In equation (1), $G_{220}$ denotes egress route graph 220, V denotes the vertices of egress route graph 220, i.e. the plurality of egress route nodes, and E denotes the edges of egress route graph 220, i.e. the of egress route edges.

The plurality of egress route edges includes lane direction edges and lane change edges. The plurality of egress route edges may thus be defined as shown in equation (2).

$$E = \{e_{ld1}, \cdots, e_{ldn}, e_{lc1}, \cdots, e_{lcm}\} \qquad\qquad (2)$$

In equation (2), $e_{ld1}$ to $e_{ldn}$ denote lane direction edges and $e_{lc1}$ to $e_{lcm}$ denote lane change edges. Accordingly, egress route graph 220 may, as defined in equation (2), include n lane direction edges and m lane change edges.

Lane direction edges correspond to lanes of a section of highway 200. In other words, each lane direction edge represents a lane of highway 200 with the direction of each lane direction edge indicating the direction of travel of the corresponding lane. Accordingly, the number of lane direction edges is based on the lane number discussed above. If the lane number of a link and thus the number of lanes of a section of highway 200 is missing, the number of lane direction edges is determined based on the closest preceding link including a lane number and the closest succeeding link including a lane number. More precisely, the number of lane direction edges corresponds to all conceivable connections between the lanes of the closest preceding link including a lane number and the lanes of the closest succeeding link including a lane number. Conceivable in the context of connections refers to connections which are typically present on at least partially controlled-access multilane highways. For example, if the closest succeeding link including a lane number indicates one lane less than the closest preceding link including a lane number, one of the two rightmost lanes or of the two leftmost lanes of the closest preceding link may terminate and may accordingly connect to the leftmost lane or the rightmost lane of the closest succeeding link including a lane number.

The lane direction edges are connected to one another based on the lane relationship information of the plurality of links. That is, each lane direction edge is connected to neighboring lane direction edges based on the connections indicated by the respective lane relationship information. In the context of the present disclosure, the expression "neighboring lane direction edges" is to be understood as referring to lane direction edges preceding and succeeding a given lane direction edge in the direction of travel of a lane of highway 200 as determined based on the geographic positions of the plurality of links. If a lane relationship information of a given link is missing the connections may be determined based on lane relationship assumption. The lane relationship assumption may be a set of connection rules, which may be specific to a type of highway 200 or which may be country-specific. The lane relationship assumption may be based on the approach of connecting all lane direction edges between two neighboring sections. It will be understood that the lane relationship assumption may be any kind of determination of lane direction edge connections based on conceivable connections of lane direction edge connections, as discussed above.

The concept of generating lane direction edges based on links not including lane information and conceivable connections is illustrated in Fig. 2 with regard to links $l_2$ and $l_4$. For links $l_2$ and $l_4$, which do not include lane information, four lane direction edges are generated. In the case of link $l_2$, the four lane direction edges connect the three lanes of the preceding section corresponding to link $l_1$ and the two lanes of the succeeding section corresponding to link $l_3$. In the case of link $l_4$, the four lane direction edges connect the two lanes of the preceding section corresponding to link $l_3$ and the three lanes of the succeeding section corresponding to link $l_5$. Accordingly, the number of lane direction edges generated per link is based on the lane numbers of the plurality of links in both cases. In the case of links including a lane number, the number of lane direction edges generated per such link corresponds to the lane number. In the case of links not including a lane number, the number of lane direction edges generated per such link is derived from the lane numbers of preceding and succeeding links. Further, the connections of the lane direction edges to the neighboring lane direction edges in the example are based on lane relationship assumption, which in this example is based on the assumption that typically outermost lanes end or that new lanes typically start on the left or right of highway 200.

It will be understood that lane direction edges corresponding to lanes of highway 200 are unidirectional, as shown in Fig. 1A and 2. However, lane direction edges indicative of lanes at at-grade intersections may in some cases be bidirectional, indicating combined egress and access lanes in examples of highway 200 being a limited-access highway.

Lane change edges correspond to lane changes between lanes of highway 200. That is, lane change edges indicate that a lane change between lanes of a given section of highway 200 is legally permissible, e.g. in view of road surface markings or traffic regulations, which may be indicated in the lane change information included in the plurality of links or which may be provided to method 300 by a lane change rule set. In some examples, method 300 may also generate lane change between all lane direction edges and account for this approach as discussed in detail below with regard to step 330. While the lane change edges connect vertices of egress route graph 220 corresponding lanes of highway 200, as e.g. shown in Figs. 1C and Fig. 2, lane change edges do not indicate that a lane change is only possible at the location corresponding to the respective vertices. Lane changes may also be possible along two lanes represented by two parallel unidirectional edges of egress route graph 220 starting at the respective vertices. For example, a lane change may be possible for at least part of the unidirectional edges staring at the corresponding vertices or for the entirety of said lane direction edges until a subsequent vertex in the direction of travel is reached. The subsequent vertex may or may not be connected to a bidirectional edge, thereby indicating a potential change in lane change permissibility. This concept can e.g. be seen in Fig. 2, which shows in the section of highway 200 corresponding to links $l_6$, and $l_7$ that no lane change is permissible between the first lane and the second lane within these sections but that such a lane change is possible within the section of highway 200 corresponding to link $l_8$.

It will be understood that the lane change edges may be bidirectional, as shown in Figs. 1C and 2, or may be unidirectional, if a lane change from one lane to the other is permissible but not the other way round.

Each egress route node of the plurality of egress route nodes defines a start and an end of the lane direction edges based on the geographic positions of the plurality of links. In other words, the egress route nodes include the geographical positions defining the start and the end of the sections of highway 200 as defined in the links of map data 210.

More precisely, each egress route node corresponds to a connection of two lane direction edges and includes the geographic position of connection. It will be understood that each egress route node thus corresponds to a beginning of one section and an end of a corresponding succeeding section of highway 200.

Based on the above definitions of egress route graph 220 and the elements of egress route graph 220, step 320 may include steps 321 to 324.

In step 321, method 300 may generate, a number of lane direction edges for each link including a lane number with the number of lane direction edges generated for each link corresponding to the lane number. For each link which also includes lane relationship information, each lane direction edge is connected to two neighboring lane direction edges based on the lane relationship information. For each link which does not include lane relationship information, each lane direction edge is connected to two neighboring lane direction edges based on a lane relationship assumption, as discussed above.

In step 322, method 300 may generate, for each link not including a lane number, a number of lane direction edges based on lane numbers of neighboring links respectively including a lane number. That is, method 322 may generate for each link not including a lane number, a number of lane direction edges, which are connected to neighboring lane direction edges based on conceivable connections between lane direction edges as discussed above.

In step 323, method 300 may generate, at each connection of two lane direction edges, an egress route node. Each egress route node includes a geographic position based on the links corresponding to the respective two lane direction edges. More precisely, the geographic position included in each egress route node corresponds to an end of a link and a beginning of a subsequent link. It will be understood that as part of step 323, method 300 may not generate more than one egress route node per geographical position.

In step 324, method 300 may generate lane change edges indicative of lane changes between at least a subset of the plurality of egress route nodes. The generation of the lane change edges may be based on lane change information included in the plurality of links or may be based on known traffic regulations governing lane changes or any other type of information indicating permissible lane changes.

It will be understood that steps 321 to 324 merely represent an example of how egress route graph 220 may be generated based on the principles discussed above with regard to step 320. Method 300 may, in step 320, generate egress route graph 220 in any way suitable based on the principles discussed above.

In step 330, method 300 assigns to each egress route edge a confidence value. and a cost value. In other words, method 300 may assign in step 330 to each egress route two weights. Accordingly, egress route graph 220 is a weighted graph.

The confidence value is indicative of an existence probability of each egress route edge. That is, the confidence value may indicate how probable the existence of each egress route appears to be. For example, in the case of a lane direction edge based on a link including both lane numbers and lane relationship information, it can be assumed that the corresponding lane of highway 200 and thus the lane direction edge definitely exists. In such cases, the confidence value may indicate a high existence probability, such as a maximum existence probability. If either one or both the lane number and lane relationship information are not included in a given link, the corresponding lane direction edge may or may not exist, given that the corresponding lane direction edge may be based on neighboring lane directions or assumptions concerning the connection of the lane direction edge with neighboring lane direction edges. In such cases, the confidence value method 300 assigns to the corresponding lane direction edges may reflect at least some level of uncertainty regarding the existence of such lane direction edges. The same principles apply to lane change edges. If lane change edges are based on lane change information of links of map data 210, the confidence value may indicate a high existence probability, such as a maximum existence probability. If lane change edges have been generated in step 320 based on a lane change rule set or based on the approach of generating lane change edges between all lane direction edges, the confidence value assigned by method 300 may reflect at least some level of uncertainty regarding the existence of such lane change edges. In summary, the confidence value may also be understood as indicating the confidence method 300 has that a given egress route edge exists.

To provide an example of the above concept, method 300 may assign a confidence value in a range of 0 to 1 to each egress route edge, with 0 indicating that a given egress route edge does not exist and 1 indicating that a given egress route edge does exist, i.e. a value of 1 may indicate a maximum existence probability. If an egress route edge is based on lane information or lane change information included in the links of map data 210, method 300 may assign a confidence value of 1, i.e. the maximum probability value. Method 300 may also account for the quality of map data 210 by assigning a value less than 1 in these cases, such as 0.95, 0.9 or 0.85, if map data 210 is considered to be not fully accurate. If an egress route edge is based on lane relationship assumptions, lane change rule sets or based on the approach of generating lane change edges between all lane direction edges, method 300 may assign a confidence value of 0.5 to reflect the existence uncertainty discussed above. If method 300 is more or less confident in the existence of an egress route edge, method 300 may also assign a value higher than or lower than 0.5, such as 0.6 or 0.4, respectively.

It will be understood that the value range of 0 to 1 is merely provided as an example. Method 300 may assign confidence values based on any kind of value range or based on any other metric indicative of a range from "egress route edge does most probably not exist" to "egress route edge does most likely exist".

In accordance with the above principles regarding confidence values, step 330 may include steps 331 and 332. In step 332, method 300 may assign to each egress route edge corresponding to a link including at least one of a lane number and lane relationship information a confidence value indicative of a maximum existence probability. In step 332, method 300 may assign to each egress route edge not corresponding to a link including at least one of a lane number and lane relationship information a confidence value indicative of an existence probability of the respective egress route edge.

The cost value is indicative of the cost of traversing each egress route edge. That is, the cost value reflects whether any additional cost in addition to the cost already incurred by driving along highway 200 toward the target off-ramp. Accordingly, following along a lane direction edge may incur no additional cost while changing lanes may, incur additional costs, e.g. due a necessary reduction in speed. Further, the closer an egress route edge is to the target off-ramp, the urgency to navigate toward the target off-ramp increases, which may likewise be included in the cost value assigned to egress route edges of egress route graph 220 closer to the target off-ramp. Accordingly, the cost of traversing each egress route edge may take into account various cost factors, such as those described above or additional costs indicative of the cost of reaching the target-off ramp.

Using a value range of 0 to 1 again as an example, a value of zero may indicate no additional cost associated with traversing a given egress route edge while a value of 1 may indicate maximum additional cost associated with traversing a given egress route edge. To reflect the increasing urgency with increasing proximity to the target-off ramp, method 300 may assign cost values gradually approaching 1 with increasing proximity to the target off ramp. For example, a lane direction edge corresponding to the leftmost lane of highway 200 at the same position of highway 200 as the target off-ramp (cf. e.g. link $l_7$ in Fig. 2) may be assigned a cost value of 1 given that it may be difficult to impossible to still reach the target off-ramp from this lane direction edge. Accordingly, lane direction edges at the beginning of egress route edges may have a cost value 0. For the lane furthest away from the target off-ramp, e.g. the leftmost lane in Fig. 1A and 2, the cost value may approach 1 with increasing proximity to the target off-ramp. For the lane closest to the target off-ramp, e.g. the rightmost lane in Fig. 1A and Fig. 2, the cost value may stay close to or remain 0 with increasing proximity to the target off-ramp. With regard to the lane change edges, the cost value may reflect a base lane change cost, such as 0.25 or 0.4, With increasing proximity to the target off-ramp, the cost value assigned by method 300 may increase steeply for lane change edges connected to lane direction edges corresponding to the leftmost lane of highway 200. By contrast, the cost value assigned by method 300 may only increase slowly for lane change edges connected to the rightmost lane of highway 200.

In addition, a given egress route edge assigned a confidence value indicative of the given egress route edge most likely not existing may be assigned a cost value of 1 or of infinity to also reflect the lack of probability that the given egress route edge exists also in the cost value.

It will be understood that the value range of 0 to 1 is merely provided as an example. Method 300 may assign cost values based on any kind of value range or based on any other metric indicative of a range from "no additional cost" to "maximum additional cost".

In accordance with the above principles regarding cost values, step 330 may include steps 333 to 335.

In step 333, method 300 may assign to each lane direction edge a lane cost based on a drivable speed during traversal of the lane direction edge. For example, the lane cost based on drivable speed may be zero if a given lane direction edge can be traversed at the national speed limit or a speed set by the driver of vehicle 100 or set by an autonomous driving function of vehicle 100. If the drivable speed is lower than such a speed limit or set speed, the lane cost based on a drivable speed may increase with decreasing speed. The lane cost based on a drivable speed may also take into account sensor data of the one or more sensors 110, which may indicate the drivable speed.

In step 334, method 300 may assign to each lane change edge a lane change cost. The lane change cost may be based on at least one of a lane change success probability, a traffic density in a target lane of a corresponding lane change and a lane change direction cost. The lane change direction cost may account for the fact that switching lanes form a faster lane, such as the leftmost lane in Figs. 1A and 2, to a slower lane, may be easier to perform than a lane change from a slower lane to a faster lane. The lane change success probability, the traffic density in a target lane of a corresponding lane change and the lane change direction cost may also take into account sensor data of the one or more sensors 110.

In step 335, method 300 may assign to each egress route edge an urgency cost, the urgency cost being indicative of a remaining distance to the target off-ramp. As discussed above, the further away in terms of lanes an egress route edge is while approaching the target off-ramp, the higher the urgency to navigate toward the off-ramp. This urgency may be reflected by the urgency, which may accordingly increase the lower the remaining distance, in particular in the case of egress route edges associated with the lane farthest away from the target off-ramp, such as the leftmost lane in Figs. 1A and 2.

In step 340, method 300 determines the egress route. The egress route corresponds to a path through egress route graph 220 to the target off-ramp which has an optimized total confidence value and an optimized total cost value. In other words, method 300 may in step 340 apply an algorithm for determining a shortest path through egress route graph 220 in view of the cost values and confidence values assigned to the egress route graph edges in step 330. Examples of algorithm for determining a shortest path through egress route graph 220 may include, but are not limited to, Dijkstra's algorithm, A* algorithm, Bellman-Ford algorithm or Floyd-Warshall algorithm. To this end, step 340 may include step 341, in which method 300 may determine a shortest path through the egress route graph having a lowest associated total cost value and a maximum associated total confidence value.

It will be understood that the egress route may not include egress route edges with a confidence value indicative of the lowest existence probability. Likewise, egress route edges with a cost value indicative of the highest additional traversal cost may be excluded from the egress route.

Method 300 may include a step 350, in which method 300 updates the egress route graph based on the sensor data captured by the one or more sensors of 110 of vehicle 100. As discussed above, the sensor data may be indicative of at least one of a traffic condition on each lane of highway 200, which is illustrated in Fig. 2. In Fig. 2 vehicle 100 may be ware of other vehicle 101 and trucks 102 based on the sensor data of one or more sensors 110. The sensor data may be further be indicative of road surface markings, as e.g. indicated by the solid lines toward the target-off ramp of highway 200 in Fig. 2. The sensor data may be further indicative of an end of a lane of highway 200. Based on the sensor data of the one or more sensors, method 300 may update egress route graph 220 and more precisely the weights of the egress route edges. To this end, step 350 may include step 351, in which method 300 may update the probability value and the cost value of each egress route edge of the plurality of egress route edges based on the sensor data of one or more sensors 110.

To provide an example of updating the probability value based on the sensor data, a probability value of an egress route edge initially set to a value indicating a lower existence probability due to corresponding to a link of map data 210 without lane information or lane change information, may be increased, e.g. even to the maximum existence probability if the sensor data indicates the existence of the lane. In the contrary, if the sensor data indicates that an egress route edge generated based on a link without lane information or lane change information does not exist, the probability value may be updated to indicate the lowest existence probability. In the context of lane change edges, the probability value of these edges may be updated based on detected road surface markings, which may indicate that lane changes may not be permissible. If such road markings are detected, the respective probability values may be set to the lowest probability value.

To provide an example of updating the cost value based on the sensor data, the cost value associated with an egress route edge may be increased or decreased, respectively, based on a traffic density detected by the one or more sensors. Analogously, if the drivable speed is determined by the sensor data to increase or decrease, the cost values of the corresponding egress route edges are decreased or increased, respectively.

Steps 340 and 350 may be continuously performed while vehicle 100 travels toward the target off-ramp. That is, method 300 initially assigns in step 330 probability values and confidence values to the egress route edges based on which method 300 determines in step 340 an initial egress route. Afterward, method 300 may update the probability values and confidence values in step 350 and re-determine the egress route in step 340 and repeat these steps until reaching the target off-ramp. This concept is indicated in Fig. 3 by the bidirectional arrow between steps 340 and 350. Accordingly, by repeatedly performing steps 340 and 350, the egress route determined in step 340 may constantly take into account the current position of vehicle 100 and the sensor data captured by the one or more sensors 110.

It will be understood that while steps 340 and 350 may be performed continuously, the egress route may only be determined once without updates to the egress route graph, for example if highway 200 is reserved to automated vehicles only, in which case vehicle 100 may broadcast its route intention to other vehicles on highway 200. In such cases, no re-destination of the egress route and updating of egress route graph 220 may be necessary.

Fig. 5 shows automotive control unit 400 configured to perform method 300. automotive control unit 400 may include a processor 410, a graphics processing unit (GPU) 320, automotive processing system 430, a memory 440, a removable storage 450, a storage 460, a cellular interface 470, a global navigation satellite system (GNSS) interface 480 and a communication interface 490.

Processor 410 may be any kind of single-core or multi-core processing unit employing a reduced instruction set (RISC) or a complex instruction set (CISC). Exemplary RISC processing units include ARM based cores or RISC V based cores. Exemplary CISC processing units include x86 based cores or x86-64 based cores. Processor 410 may perform instructions causing automotive control unit 400 to perform method 300. Processor 410 may be directly coupled to any of the components of computing device 400 or may be directly coupled to memory 430, GPU 420 and a device bus.

GPU 420 may be any kind of processing unit optimized for processing graphics related instructions or more generally for parallel processing of instructions. As such, GPU 420 may be configured to generate a display of information, such as ADAS information or telemetry data, to a driver of the vehicle, e.g. via a head-up display (HUD) or a display arranged within the view of the driver. GPU 420 may be coupled to the HUD and/or the display via connection 420C. GPU 420 may further perform at least a part of method 300 to enable fast parallel processing of instructions relating to method 300. It should be noted that in some embodiments, processor 410 may determine that GPU 420 need not perform instructions relating to method 300. GPU 420 may be directly coupled to any of the components of automotive control unit 400 or may be directly coupled to processor 410 and memory 430. In some embodiments, GPU 320 may also be coupled to the device bus.

Automotive processing system 430 may be any kind of system-on chip configured to provide trillions of

**EP 4 538 647 B1**

operations per second (TOPS) in order to enable automotive control unit 400 to implement one or more ADAS while driving. Automotive processing system 430 may interface only with processor 410 or may interface with other devices via the system bus. Automotive processing system 430 may for example perform the instructions related to updating egress route graph 220 and re-determining the egress route graph based on updated egress route graph 220. Automotive processing system 430 may further determine the lateral and longitudinal control of vehicle 100 toward the target-off-ramp of highway 200.

Memory 440 may be any kind of fast storage enabling processor 410, GPU 420 and automotive processing system 430 to store instructions for fast retrieval during processing of instructions as well as to cache and buffer data. Memory 440 may be a unified memory coupled to processor 410 and GPU 420 and automotive processing system 330 in order to enable allocation of memory 340 to processor 310, GPU 320 and automotive processing system 430 as needed. Alternatively, processor 410, GPU 320 and automotive processing system 430 may be coupled to separate processor memory 440a, GPU memory 440b and automotive processing system memory 440c.

Removable storage 450 may be a storage device which can be removably coupled with automotive control unit 400. Examples include a digital versatile disc (DVD), a compact disc (CD), a Universal Serial Bus (USB) storage device, such as an external SSD, or a magnetic tape. It should be noted that removable storage 450 may store data, such as instructions of method 300 and/or map data 210, or may be omitted.

Storage 460 may be a storage device enabling storage of program instructions and other data. For example, storage 460 may be a hard disk drive (HDD), a solid state disk (SSD) or some other type of non-volatile memory. Storage 460 may for example store the instructions of method 300.

Removable Storage 450 and storage 460 may be coupled to processor 410 via the system bus. The system bus may be any kind of bus system enabling processor 410 and optionally GPU 420 as well as automotive processing system 430 to communicate with the other devices of automotive control unit 400. Bus 440 may for example be a Peripheral Component Interconnect express (PCIe) bus or a Serial AT Attachment (SATA) bus.

Cellular interface 470 may be any kind of interface enabling automotive control unit 400 to communicate via a cellular network, such as a 4G network or a 5G network.

GNSS interface 480 may be any kind of interface enabling automotive control unit 400 to receive position data provided by a satellite network, such as the Global Positioning System (GPS), the Global Navigation Satellite System (GLONASS) or Galileo. The position data may be used when generating and updating egress route graph 320 and when determining and re-determining the egress route.

Communications interface 490 may enable computing device 400 to interface with external devices, either directly or via network, via connection 480C. Communications interface 380 may for example enable computing device 400 to couple to a wired or wireless network, such as Ethernet, Wifi, a Controller Area Network (CAN) bus or any bus system appropriate in vehicles. For example, automotive control unit 400 may be coupled to the one or more sensors 110 to receive information about the environment of vehicle 100 in order to update egress route graph 210. Communications interface 490 may also include a USB port or a serial port to enable direct communication with an external device.

Automotive control unit 400 may be integrated with the vehicle, e.g. beneath the cabin, under the dashboard or in the trunk of vehicle 400.

The preceding description has been provided to illustrate the determination of an egress route on the controlled-access highway. It should be understood that the description is in no way meant to limit the scope of the present disclosure to the precise embodiments discussed throughout the description. Rather, the person skilled in the art will be aware that the examples of the present disclosure may be combined, modified or condensed without departing from the scope of the present disclosure as defined by the following claims.

List of Reference Signs

| | |
|---|---|
| 100 | vehicle |
| 101 | other vehicle |
| 102 | truck |
| 110 | sensor |
| 120 | light |
| 200 | at least partially controlled-access multilane highway 200 |
| 210 | map data |
| 220 | egress route graph |
| L1 - l10 | link |
| 300 | method |
| 310 - 351 | method steps |

| 400 | automotive control unit |
|-----|------------------------|
| 410 | CPU |
| 420 | GPU |
| 420c | connection |
| 430 | automotive processing system |
| 440 | memory |
| 450 | removable storage |
| 460 | storage |
| 470 | cellular interface |
| 480 | GNSS interface |
| 490 | communications interface |

**Claims**

1. Method, executed by an automotive control unit, for determining an egress route for a vehicle to a target off-ramp of an at least partially controlled-access multilane highway, comprising:

obtaining map data regarding the at least partially controlled-access multilane highway, the map data being arranged in a plurality of links, each link defining for a corresponding section of the at least partially controlled-access multilane highway a geographic position, wherein at least a subset of the plurality of links includes at least one of a lane number and lane relationship information;
generating an egress route graph based on the map data and the target off-ramp, the egress route graph comprising a plurality of egress route nodes and a plurality of egress route edges, wherein:

the plurality of egress route edges includes lane direction edges based on the lane numbers and the lane relationship information of the plurality of links and lane change edges corresponding to lane changes between lanes of the at least partially controlled-access multilane highway, and
each egress route node of the plurality of egress route nodes defines a start and an end of the lane direction edges based on the geographic positions of the plurality of links;

**characterized in that** the method further comprises:

assigning to each egress route edge a confidence value indicative of an existence probability of each egress route edge and a cost value indicative of the cost of traversing each egress route edge; and
determining the egress route, the egress route corresponding to a path through the egress route graph to the target off-ramp having an optimized total confidence value and an optimized total cost value.

2. The method of claim 1, wherein assigning to each egress route edge a confidence value includes assigning to each egress route edge corresponding to a link including at least one of a lane number and lane relationship information a confidence value indicative of a maximum existence probability.

3. The method of any one of the preceding claims, wherein assigning to each egress route edge a confidence value includes assigning to each egress route edge not corresponding to a link including at least one of a lane number and lane relationship information a confidence value indicative of an existence probability of the respective egress route edge.

4. The method of any one of the preceding claims, wherein assigning to each egress route edge a cost value includes assigning to each lane direction edge a lane cost based on a drivable speed during traversal of the lane direction edge.

5. The method of any one of the preceding claims, wherein assigning to each egress route edge a cost value includes assigning to each lane change edge a lane change cost, the lane change cost being based on at least one of a lane change success probability, a traffic density in a target lane of a corresponding lane change and a lane change direction cost.

6. The method of any one of the preceding claims, wherein assigning to each egress route edge a cost value includes assigning to each egress route edge an urgency cost, the urgency cost being indicative of a remaining distance to the target off-ramp.

7. The method of any one of the preceding claims, further comprising:
updating the egress route graph based on sensor data captured by the vehicle, the sensor data being indicative of at least one of a traffic condition on each lane of the at least partially controlled-access multilane highway, one or more road surface markings and an end of a lane of the at least partially controlled-access multilane highway.

8. The method of claim 7, wherein updating the egress route graph based on the sensor data includes updating the probability value and the cost value of each egress route edge of the plurality of egress route edges.

9. The method of any one of the preceding claims, wherein the determining the egress route comprises determining a shortest path through the egress route graph having a lowest associated total cost value and a maximum associated total confidence value.

10. The method of any one of the preceding claims, wherein the generating the egress route graph includes:

generating, for each link including a lane number, a number of lane direction edges corresponding to the lane number,

wherein, for each link further including lane relationship information, each lane direction edge is connected to two neighboring lane direction edges based on the lane relationship information, and
wherein, for each link not including lane relationship information, each lane direction edge is connected to two neighboring lane direction edges based on a lane relationship assumption,

generating, for each link not including a lane number, a number of lane direction edges based on lane numbers of neighboring links respectively including a lane number;
generating, at each connection of two lane direction edges, an egress route node, each egress route node including a geographic position based on the links corresponding to the respective two lane direction edges; and
generating lane change edges indicative of lane changes between at least a subset of the plurality of egress route nodes.

11. An automotive control unit, comprising:

at least one processing unit; and
a memory coupled to the at least one processing unit and configured to store machine-readable instructions, wherein the machine-readable instructions cause the at least one processing unit to:

obtain map data regarding the at least partially controlled-access multilane highway, the map data being arranged in a plurality of links, each link defining for a corresponding section of the at least partially controlled-access multilane highway a geographic position, wherein at least a subset of the plurality of links includes at least one of a lane number and lane relationship information;
generate an egress route graph based on the map data and the target off-ramp, the egress route graph comprising a plurality of egress route nodes and a plurality of egress route edges, wherein:

the plurality of egress route edges includes lane direction edges based on the lane numbers and the lane relationship information of the plurality of links and lane change edges corresponding to lane changes between lanes of the at least partially controlled-access multilane highway, and
each egress route node of the plurality of egress route nodes defines a start and an end of the lane direction edges based on the geographic positions of the plurality of links;

**characterized in that** the machine-readable instructions further cause the processor to:

assign to each egress route edge a confidence value indicative of an existence probability of each egress route edge and a cost value indicative of the cost of traversing each egress route edge; and
determine the egress route, the egress route corresponding to a path through the egress route graph to the target off-ramp having an optimized total confidence value and an optimized total cost value.

12. The automotive control unit of claim 11, wherein the machine-readable instructions further cause the at least one processing unit to perform the method of any one of claims 2 to 10.

13. A vehicle comprising the automotive control unit of any one of claims 11 and 12.

**Patentansprüche**

1. Verfahren, ausgeführt durch eine Fahrzeugsteuereinheit, zur Bestimmung einer Ausfahrtroute für ein Fahrzeug zu einer Zielausfahrt einer zumindest teilweise zugangsbeschränkten mehrspurigen Autobahn, umfassend:

Erhalten von Kartendaten bezüglich der zumindest teilweise zugangsbeschränkten mehrspurigen Autobahn, wobei die Kartendaten in einer Vielzahl von Verbindungen angeordnet sind, wobei jede Verbindung für einen entsprechenden Abschnitt der zumindest teilweise zugangsbeschränkten mehrspurigen Autobahn eine geografische Position definiert, wobei mindestens eine Teilmenge der Vielzahl von Verbindungen mindestens eines von einer Spuranzahl und Spurbeziehungsinformationen enthält;
Erzeugen eines Ausfahrtroutengraphen basierend auf den Kartendaten und der Zielausfahrt, wobei der Ausfahrtroutengraph eine Vielzahl von Ausfahrroutenknoten und eine Vielzahl von Ausfahrroutenkanten umfasst, wobei:

die Vielzahl von Ausfahrroutenkanten Spurrichtungskanten basierend auf den Spuranzahlen und den Spurbeziehungsinformationen der Vielzahl von Verbindungen und Spurwechselkanten entsprechend Spurwechseln zwischen Spuren der zumindest teilweise zugangsbeschränkten mehrspurigen Autobahn umfasst, und jeder Ausfahrroutenknoten der Vielzahl von Ausfahrroutenknoten einen Anfang und ein Ende der Spurrichtungskanten basierend auf den geografischen Positionen der Vielzahl von Verbindungen definiert; **dadurch gekennzeichnet, dass** das Verfahren ferner umfasst:

Zuweisen eines Konfidenzwertes zu jeder Ausfahrroutenkante, der eine Existenzwahrscheinlichkeit jeder Ausfahrroutenkante angibt, und eines Kostenwerts, der die Kosten für das Durchqueren jeder Ausfahrroutenkante angibt; und
Bestimmen der Ausfahrtroute, wobei die Ausfahrtroute einem Pfad durch den Ausfahrtroutengraphen zur Zielausfahrt entspricht, der einen optimierten Gesamtkonfidenzwert und einen optimierten Gesamtkostenwert aufweist.

2. Verfahren nach Anspruch 1, wobei das Zuweisen eines Konfidenzwertes zu jeder Ausfahrroutenkante das Zuweisen eines Konfidenzwertes zu jeder Ausfahrroutenkante, die einer Verbindung entspricht, die mindestens eines von einer Spuranzahl und Spurbeziehungsinformationen enthält, umfasst, wobei der Konfidenzwert eine maximale Existenzwahrscheinlichkeit angibt.

3. Verfahren nach einem der vorhergehenden Ansprüche, wobei das Zuweisen eines Konfidenzwertes zu jeder Ausfahrroutenkante das Zuweisen eines Konfidenzwertes zu jeder Ausfahrroutenkante umfasst, die nicht einer Verbindung entspricht, die mindestens eines von einer Spuranzahl und Spurbeziehungsinformationen enthält, wobei der Konfidenzwert eine Existenzwahrscheinlichkeit der jeweiligen Ausfahrroutenkante angibt.

4. Verfahren nach einem der vorhergehenden Ansprüche, wobei das Zuweisen eines Kostenwertes zu jeder Ausfahrroutenkante das Zuweisen von Spurkosten zu jeder Spurrichtungskante umfasst, basierend auf einer fahrbaren Geschwindigkeit während der Durchquerung der Spurrichtungskante.

5. Verfahren nach einem der vorhergehenden Ansprüche, wobei das Zuweisen eines Kostenwertes zu jeder Ausfahrroutenkante das Zuweisen von Spurwechselkosten zu jeder Spurwechselkante umfasst, wobei die Spurwechselkosten auf mindestens einem von einer Spurwechselerfolgswahrscheinlichkeit, einer Verkehrsdichte in einer Zielspur eines entsprechenden Spurwechsels und Spurwechselrichtungskosten basieren.

6. Verfahren nach einem der vorhergehenden Ansprüche, wobei das Zuweisen eines Kostenwertes zu jeder Ausfahrroutenkante das Zuweisen von Dringlichkeitskosten zu jeder Ausfahrroutenkante umfasst, wobei die Dringlichkeitskosten eine verbleibende Entfernung zur Zielausfahrt angeben.

7. Verfahren nach einem der vorhergehenden Ansprüche, ferner umfassend:
Aktualisieren des Ausfahrtroutengraphen basierend auf Sensordaten, die vom Fahrzeug erfasst wurden, wobei die Sensordaten mindestens eines von einem Verkehrszustand auf jeder Spur der zumindest teilweise zugangsbeschränkten mehrspurigen Autobahn, einer oder mehreren Fahrbahnmarkierungen und einem Ende einer Spur der zumindest teilweise zugangsbeschränkten mehrspurigen Autobahn angeben.

8. Verfahren nach Anspruch 7, wobei das Aktualisieren des Ausfahrtroutengraphen basierend auf den Sensordaten das Aktualisieren des Wahrscheinlichkeitswertes und des Kostenwertes jeder Ausfahrroutenkante der Vielzahl von Ausfahrroutenkanten umfasst.

9. Verfahren nach einem der vorhergehenden Ansprüche, wobei das Bestimmen der Ausfahrtroute das Bestimmen eines kürzesten Pfades durch den Ausfahrtroutengraphen umfasst, der einen niedrigsten zugehörigen Gesamtkostenwert und einen maximalen zugehörigen Gesamtkonfidenzwert aufweist.

10. Verfahren nach einem der vorhergehenden Ansprüche, wobei das Erzeugen des Ausfahrtroutengraphen umfasst:

Erzeugen, für jede Verbindung, die eine Spuranzahl enthält, einer Anzahl von Spurrichtungskanten entsprechend der Spuranzahl,
wobei für jede Verbindung, die ferner Spurbeziehungsinformationen enthält, jede Spurrichtungskante mit zwei benachbarten Spurrichtungskanten basierend auf den Spurbeziehungsinformationen verbunden ist, und
wobei für jede Verbindung, die keine Spurbeziehungsinformationen enthält, jede Spurrichtungskante mit zwei benachbarten Spurrichtungskanten basierend auf einer Spurbeziehungsannahme verbunden ist,
Erzeugen, für jede Verbindung, die keine Spuranzahl enthält, einer Anzahl von Spurrichtungskanten basierend auf Spuranzahlen benachbarter Verbindungen, die jeweils eine Spuranzahl enthalten;
Erzeugen, an jeder Verbindung von zwei Spurrichtungskanten, eines Ausfahrroutenknotens, wobei jeder Ausfahrroutenknoten eine geografische Position basierend auf den Verbindungen enthält, die den jeweiligen zwei Spurrichtungskanten entsprechen; und
Erzeugen von Spurwechselkanten, die Spurwechsel zwischen mindestens einer Teilmenge der Vielzahl von Ausfahrroutenknoten anzeigen.

11. Fahrzeugsteuereinheit, umfassend:

mindestens eine Verarbeitungseinheit; und
einen Speicher, der mit der mindestens einen Verarbeitungseinheit gekoppelt und konfiguriert ist, maschinenlesbare Anweisungen zu speichern, wobei die maschinenlesbaren Anweisungen die mindestens eine Verarbeitungseinheit veranlassen:

Kartendaten bezüglich der zumindest teilweise zugangsbeschränkten mehrspurigen Autobahn zu erhalten, wobei die Kartendaten in einer Vielzahl von Verbindungen angeordnet sind, wobei jede Verbindung für einen entsprechenden Abschnitt der zumindest teilweise zugangsbeschränkten mehrspurigen Autobahn eine geografische Position definiert, wobei mindestens eine Teilmenge der Vielzahl von Verbindungen mindestens eines von einer Spuranzahl und Spurbeziehungsinformationen enthält;
einen Ausfahrtroutengraphen basierend auf den Kartendaten und der Zielausfahrt zu erzeugen, wobei der Ausfahrtroutengraph eine Vielzahl von Ausfahrroutenknoten und eine Vielzahl von Ausfahrroutenkanten umfasst, wobei:

die Vielzahl von Ausfahrroutenkanten Spurrichtungskanten basierend auf den Spuranzahlen und den Spurbeziehungsinformationen der Vielzahl von Verbindungen und Spurwechselkanten entsprechend Spurwechseln zwischen Spuren der zumindest teilweise zugangsbeschränkten mehrspurigen Autobahn umfasst, und
jeder Ausfahrroutenknoten der Vielzahl von Ausfahrroutenknoten einen Anfang und ein Ende der Spurrichtungskanten basierend auf den geografischen Positionen der Vielzahl von Verbindungen definiert;
dadurch gekennzeichnet, dass die maschinenlesbaren Anweisungen den Prozessor ferner veranlassen:

jeder Ausfahrroutenkante einen Konfidenzwert zuzuweisen, der eine Existenzwahrscheinlichkeit jeder Ausfahrroutenkante angibt, und einen Kostenwert, der die Kosten für das Durchqueren jeder Ausfahrroutenkante angibt; und
die Ausfahrtroute zu bestimmen, wobei die Ausfahrtroute einem Pfad durch den Ausfahrtroutengraphen zur Zielausfahrt entspricht, der einen optimierten Gesamtkonfidenzwert und einen optimierten Gesamtkostenwert aufweist.

**12.** Fahrzeugsteuereinheit nach Anspruch 11, wobei die maschinenlesbaren Anweisungen die mindestens eine Verarbeitungseinheit ferner veranlassen, das Verfahren nach einem der Ansprüche 2 bis 10 durchzuführen.

**13.** Fahrzeug, umfassend die Fahrzeugsteuereinheit nach einem der Ansprüche 11 und 12.


## Revendications

**1.** Procédé, exécuté par une unité de contrôle automobile, pour déterminer une route de sortie pour un véhicule vers une rampe de sortie cible d'une autoroute à plusieurs voies à accès au moins partiellement contrôlé, comprenant:

l'obtention de données cartographiques concernant l'autoroute à plusieurs voies à accès au moins partiellement contrôlé, les données cartographiques étant organisées en une pluralité de liens, chaque lien définissant pour une section correspondante de l'autoroute à plusieurs voies à accès au moins partiellement contrôlé une position géographique, où au moins un sous-ensemble de la pluralité de liens inclut au moins l'un d'un numéro de voie et d'une information de relation entre voies ;
la génération d'un graphe de route de sortie basé sur les données cartographiques et la rampe de sortie cible, le graphe de route de sortie comprenant une pluralité de noeuds de route de sortie et une pluralité d'arêtes de route de sortie, où:

la pluralité d'arêtes de route de sortie inclut des arêtes de direction de voie basées sur les numéros de voie et l'information de relation entre voies de la pluralité de liens et des arêtes de changement de voie correspondant aux changements de voie entre les voies de l'autoroute à plusieurs voies à accès au moins partiellement contrôlé, et chaque noeud de route de sortie de la pluralité de noeuds de route de sortie définit un début et une fin des arêtes de direction de voie basés sur les positions géographiques de la pluralité de liens;
**caractérisé en ce que** le procédé comprend en outre:

l'attribution à chaque arête de route de sortie d'une valeur de confiance indicative d'une probabilité d'existence de chaque arête de route de sortie et d'une valeur de coût indicative du coût de traversée de chaque arête de route de sortie; et
la détermination de la route de sortie, la route de sortie correspondant à un chemin à travers le graphe de route de sortie vers la rampe de sortie cible ayant une valeur de confiance totale optimisée et une valeur de coût total optimisée.

**2.** Procédé selon la revendication 1, dans lequel l'attribution à chaque arête de route de sortie d'une valeur de confiance inclut l'attribution à chaque arête de route de sortie correspondant à un lien incluant au moins l'un d'un numéro de voie et d'une information de relation entre voies d'une valeur de confiance indicative d'une probabilité d'existence maximale.

**3.** Procédé selon l'une quelconque des revendications précédentes, dans lequel l'attribution à chaque arête de route de sortie d'une valeur de confiance inclut l'attribution à chaque arête de route de sortie ne correspondant pas à un lien incluant au moins l'un d'un numéro de voie et d'une information de relation entre voies d'une valeur de confiance indicative d'une probabilité d'existence de l'arête de route de sortie respective.

**4.** Procédé selon l'une quelconque des revendications précédentes, dans lequel l'attribution à chaque arête de route de sortie d'une valeur de coût inclut l'attribution à chaque arête de direction de voie d'un coût de voie basé sur une vitesse praticable pendant la traversée de l'arête de direction de voie.

**5.** Procédé selon l'une quelconque des revendications précédentes, dans lequel l'attribution à chaque arête de route de sortie d'une valeur de coût inclut l'attribution à chaque arête de changement de voie d'un coût de changement de voie, le coût de changement de voie étant basé sur au moins l'un d'une probabilité de succès de changement de voie, d'une densité de trafic dans une voie cible d'un changement de voie correspondant et d'un coût de direction de changement de voie.

**6.** Procédé selon l'une quelconque des revendications précédentes, dans lequel l'attribution à chaque arête de route de sortie d'une valeur de coût inclut l'attribution à chaque arête de route de sortie d'un coût d'urgence, le coût d'urgence étant indicatif d'une distance restante jusqu'à la rampe de sortie cible.

**7.** Procédé selon l'une quelconque des revendications précédentes, comprenant en outre:
la mise à jour du graphe de route de sortie basée sur des données de capteur capturées par le véhicule, les données de capteur étant indicatives d'au moins l'un d'une condition de trafic sur chaque voie de l'autoroute à plusieurs voies à accès au moins partiellement contrôlé, d'un ou plusieurs marquages de surface de route et d'une fin d'une voie de l'autoroute à plusieurs voies à accès au moins partiellement contrôlé.

**8.** Procédé selon la revendication 7, dans lequel la mise à jour du graphe de route de sortie basée sur les données de capteur inclut la mise à jour de la valeur de probabilité et de la valeur de coût de chaque arête de route de sortie de la pluralité d'arêtes de route de sortie.

**9.** Procédé selon l'une quelconque des revendications précédentes, dans lequel la détermination de la route de sortie comprend la détermination d'un chemin le plus court à travers le graphe de route de sortie ayant une valeur de coût total associée la plus basse et une valeur de confiance totale associée maximale.

**10.** Procédé selon l'une quelconque des revendications précédentes, dans lequel la génération du graphe de route de sortie inclut:

la génération, pour chaque lien incluant un numéro de voie, d'un nombre d'arêtes de direction de voie correspondant au numéro de voie,
où, pour chaque lien incluant en outre une information de relation entre voies, chaque arête de direction de voie est connectée à deux arêtes de direction de voie voisines basées sur l'information de relation entre voies, et où, pour chaque lien n'incluant pas d'information de relation entre voies, chaque arête de direction de voie est connectée à deux arêtes de direction de voie voisines basées sur une hypothèse de relation entre voies,
la génération, pour chaque lien n'incluant pas de numéro de voie, d'un nombre d'arêtes de direction de voie basé sur les numéros de voie des liens voisins incluant respectivement un numéro de voie;
la génération, à chaque connexion de deux arêtes de direction de voie, d'un noeud de route de sortie, chaque noeud de route de sortie incluant une position géographique basée sur les liens correspondant aux deux arêtes de direction de voie respectives;
et
la génération d'arêtes de changement de voie indicatives de changements de voie entre au moins un sous-ensemble de la pluralité de noeuds de route de sortie.

**11.** Unité de contrôle automobile, comprenant:

au moins une unité de traitement; et
une mémoire couplée à l'au moins une unité de traitement et configurée pour stocker des instructions lisibles par machine, où les instructions lisibles par machine amènent l'au moins une unité de traitement à:

obtenir des données cartographiques concernant l'autoroute à plusieurs voies à accès au moins partiellement contrôlé, les données cartographiques étant organisées en une pluralité de liens, chaque lien définissant pour une section correspondante de l'autoroute à plusieurs voies à accès au moins partiellement contrôlé une position géographique, où au moins un sous-ensemble de la pluralité de liens inclut au moins l'un d'un numéro de voie et d'une information de relation entre voies;
générer un graphe de route de sortie basé sur les données cartographiques et la rampe de sortie cible, le graphe de route de sortie comprenant une pluralité de nœuds de route de sortie et une pluralité d'arêtes de route de sortie, où:

la pluralité d'arêtes de route de sortie inclut des arêtes de direction de voie basées sur les numéros de voie et l'information de relation entre voies de la pluralité de liens et des arêtes de changement de voie correspondant aux changements de voie entre les voies de l'autoroute à plusieurs voies à accès au moins partiellement contrôlé, et chaque nœud de route de sortie de la pluralité de nœuds de route de sortie définit un début et une fin des arêtes de direction de voie basés sur les positions géographiques de la pluralité de liens;
**caractérisée en ce que** les instructions lisibles par machine amènent en outre le processeur à:

attribuer à chaque arête de route de sortie une valeur de confiance indicative d'une probabilité d'existence de chaque arête de route de sortie et une valeur de coût indicative du coût de traversée de chaque arête de route de sortie; et

déterminer la route de sortie, la route de sortie correspondant à un chemin à travers le graphe de route de sortie vers la rampe de sortie cible ayant une valeur de confiance totale optimisée et une valeur de coût total optimisée.

12. Unité de contrôle automobile selon la revendication 11, dans laquelle les instructions lisibles par machine amènent en outre l'au moins une unité de traitement à exécuter le procédé selon l'une quelconque des revendications 2 à 10.

13. Véhicule comprenant l'unité de contrôle automobile selon l'une quelconque des revendications 11 et 12.

*Fig.1A*

*Fig.1B*

*Fig.1C*

Fig.2

300

310 — obtaining map data regarding an at least partially controlled-access multilane highway

320 — generating an egress route graph based on the map data and the target off-ramp

321 — generating, for each link including a lane number, a number of lane direction edges corresponding to the lane number

322 — generating, for each link not including a lane number, a number of lane direction edges based on lane numbers of neighboring links respectively including a lane number

323 — generating, , at each connection of two lane direction edges, an egress route node

324 — generating lane change edges

330 — assigning to each egress route edge a confidence value and a cost value

331 — including at least one of a lane number and lane relationship information a confidence value indicative of a maximum existence probability

332 — assigning to each egress route edge not corresponding to a link including at least one of a lane number and lane relationship information a confidence value indicative of an existence probability of the respective egress route edge

333 — assigning to each lane direction edge a lane cost

334 — assigning to each lane change edge a lane change cost

335 — assigning to each egress route edge an urgency cost

340 — determining the egress route

341 — determining a shortest path through the egress route graph having a lowest associated total cost value and a maximum associated total confidence value

350 — updating the egress route graph based on sensor data captured by the vehicle

351 — updating the probability value and the cost value of each egress route edge

Fig.3

Fig.4

Fig.5

**EP 4 538 647 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- US 2014278052 A1